# EUROPÄISCHE PATENTSCHRIFT

(11) **EP 0 569 570 B1**
(45) Veröffentlichungstag und Bekanntmachung des Hinweises auf die Patenterteilung: **19.07.1995**
(21) Anmeldenummer: 92923675.0
(22) Anmeldetag: 24.11.1992
(51) Int. Cl.: B62J 1/04

(54) **VORRICHTUNG ZUR FEDERUNG UND TRAGKRAFTVERSTELLUNG EINES FAHRZEUG-SATTELS**
DEVICE FOR SPRINGING AND ADJUSTING THE BEARING FORCE OF A VEHICLE SADDLE
DISPOSITIF POUR ASSURER LA SUSPENSION ET LE REGLAGE DE LA FORCE PORTANTE D'UNE SELLE DE VEHICULE

(30) Priorität: 29.11.1991 DE 4139284
(43) Veröffentlichungstag der Anmeldung: 18.11.1993
(73) Patentinhaber: MENZE, Heinrich, sen., D-58099 Hagen (DE)
(72) Erfinder: MENZE, Heinrich, sen., D-58099 Hagen (DE)
(74) Vertreter: Kalkoff, Heinz-Dieter, Dipl.-Ing.
(86) Internationale Anmeldenummer: DE9200982
(87) Internationale Veröffentlichungsnummer: WO9311026

(56) Entgegenhaltungen:
- FR-A- 582 272
- US-A- 2 303 567
- US-A- 2 709 096
- US,E,RE24911 (C.LEJA) 20. Dezember 1960
- GB,A,U16792 (C.POTIN) 25. Juli 1896

## Beschreibung

Die Erfindung betrifft eine Vorrichtung zur Federung und Tragkraftverstellung eines Fahrzeugsattels,
- wobei der Sattel unter der Sattelnase ein Schwenkgelenk aufweist,
- dessen Schwenkachse quer zur Fahrtrichtung des Fahrzeuges gerichtet ist,
- wobei das Schwenkgelenk aus einer Gummi- Metall-Feder mit einem äußeren Metallgehäuse,
- einem inneren Metallrohr
- und einem zwischen den einander zugewandten Flächen des Metallgehäuses und des Metallrohrs an mindestens einer dieser Flächen anvulkanisierten Gummikörper besteht,
- wobei das Metallrohr mit dem Sattel und das Metallgehäuse mit der Sattelstütze fest verbunden ist
- und die Winkellage des inneren Metallrohrs gegenüber dem äußeren Metallgehäuse verstellbar ist.

Als Fahrzeuge sind hier insbesondere Fahrräder, Dreiräder oder vergleichbare Radfahrzeuge betroffen.
Bisher ist es üblich, daß Fahrrad- oder andere Zweiradsättel ein Spiralfedersystem aufweisen, um eine gewisse Federung im Sitzbereich zu erreichen.
Diese Lösungen sind hinsichtlich ihrer Federungseigenschaft insbes. für ältere Menschen nicht ausreichend, wobei zudem nachteilig ist, daß die Tragkraft nicht verstellbar ist.

Eine Vorrichtung der eingangs genannten Art ist aus der DE-U-1,686,257 bekannt. Diese Federvorrichtung dient nicht der Tragkraftverstellung sondern der Einstellbarkeit des Sattels auf die jeweils erforderliche Neigungslage, damit die Vorrichtung für verschiedene Sattelgestelle bzw. Zweiräder verwendet werden kann. Hierfür weist das äußere Metallgehäuse der Gummi-Metall-Feder einen Schlitz in einer Radialebene und eine lösbare Befestigungsschraube auf, damit man das äußere Metallgehäuse, das den Gummikörper und innere Metallrohr umfaßt, auf dem Gummikörper festspannen kann. Zur Einstellung der Sattellage wird die Schraube gelöst, so daß sich der Schlitz entsprechend weitet und der Druck des äußeren Metallgehäuses auf den Gummikörper nachläßt. In dieser Lage läßt sich das Sattelgestell einschließlich des inneren Metallrohres und des Gummikörpers gegenüber dem äußeren Metallgehäuse und gegenüber der Sattelstütze verdrehen und in die jeweils gewünschte Neigungslage bringen. Wenn diese erreicht ist, wird die Befestigungsschraube wieder angezogen, so daß sich zwischen der Innenfläche des äußeren Metallgehäuses und der Außenfläche des Gummikörpers wieder eine feste reibschlüssige Verbindung ergibt, die eine entsprechende Torsionsfederung zwischen dem äußeren Teilgehäuse und dem inneren Metallrohr beim Durchfedern des Sattels gestattet. Eine Tragkraftverstellung ist bei dieser bekannten Federvorrichtung nicht vorgesehen, und aufgrund der Gehäuseform bedingt diese Federvorrichtung einen relativ hohen Fertigungsaufwand. Außerdem hängt die Härte der Feder und die Wirkung des Reibschlusses zwischen dem äußeren Gehäuse und dem Gummikörper sehr wesentlich davon ab, wie weit die Befestigungsschraube angezogen wird.

Aus der US-re. 24,911 ist eine Vorrichtung zur Federung und Tragkraftverstellung eines Fahrzeugsattels bekannt, die ebenfalls bereits ein Schwenkgelenk unter einem Sattel aufweist, zwar nicht unmittelbar unterhalb der Sattelnase, jedoch im vorderen Bereich des Sattels. Die Schwenkachse ist quer zur Fahrtrichtung des Fahrzeugs gerichtet. Das Schwenkgelenk weist einen sehr komplizierten Aufbau auf, der aus einem im Querschnitt dreieckförmigen Gehäuse mit drei Gummielementen in den drei Ecken des Gehäuses zum federnden Festhalten einer mittig im Gehäuse angeordneten Achse besteht, die ebenso wie das Gehäuse einen dreieckigen Querschnitt aufweist und gegenüber dem Gehäuse soweit winkelversetzt ist, daß die Spitzen des Dreiecks der Achse jeweils auf die Mitten der Dreiecksseiten des Gehäuses weist. Die Gehäuseform der Gummi-Metall-Feder bedingt nicht nur eine aufwendige Fertigung sondern erfordert auch einen hohen Montageaufwand bei der Befestigung des Gehäuses an der Sattelstütze. Einen hohen Fertigungs- und Montageaufwand erfordert auch die Achse der Gummi-Metall-Feder.

Der Federaufbau gestattet nur kleine Federwege, und es besteht die Gefahr, daß die Kanten der Achse beim Durchfedern des Sattels gegen die Innenwandung des Gehäuses schlagen.

Bei dieser Vorrichtung ist auch eine Tragkraftverstellung durch Einstellung einer Vorspannung der Gummi-Metall-Feder vorgesehen, und zwar durch eine Relativdrehung zwischen dem Gehäuse und der Achse, aber eine solche Voreinstellung ist nur in sehr engen Grenzen möglich, weil der Federaufbau, wie vorstehend dargelegt ist, nur eine relativ geringe Relativdrehung zwischen Gehäuse und Achse gestattet. Außerdem ist für die Arretierung zwischen dem Sattelrahmen und der Sattelstütze im vorgespannten Zustand nur ein Schwenkriegel an dem Sattelrahmen vorgesehen, der mit seinem freien Ende unter eine Strebe der Sattelstütze greift, um zu verhindern, daß der Sattel seine im wesentlichen horizontale Lage verläßt. Diese Arretierung bildet lediglich einen Anschlag zwischen Sattelrahmen und Sattelstütze, die sich bei Erschütterungen jederzeit lösen kann und deshalb als Mittel ausscheidet, wenn eine sichere Tragkraftverstellung erforderlich ist, bei der sich der Sattelrahmen beim Hochfedern nicht selbst lösen kann.

Ausgehend von diesem Stand der Technik, liegt der Erfindung die Aufgabe zugrunde, eine Vorrichtung gattungsgemäßer Art zu schaffen, die bei hervorragendem Federungskomfort einen geringen Fertigungs- und Montageaufwand benötigt, und eine Tragkraftverstellung zuläßt. Zur Lösung dieser Aufgabe wird vorgeschlagen, daß
- das äußere Metallgehäuse ein Metallrohr ist,
- das mit dem Gummikörper und dem inneren Metallrohr eine Gummi-MetallBüchse bildet,
- das Sattelgestell an der Gummi-Metall-Büchse mittels einer sattelgestellseitigen Verzahnung und einer damit in Eingriff stehenden Verzahnung an dem inneren Metallrohr sowie mittels einer Schraube befestigt ist,
- zum Verstellen der Tragkraft der Gummi-Metall-Büchse ein Zuganker vorgesehen ist und
- am Sattelgestell ein Ende des im Sinne einer Begrenzung der Aufwärtsbewegung des Sattels und im Sinne eines unbehinderten Einfederns des Sattels bei seiner Abwärtsbewegung flexiblen Zugankers befestigt ist,
- während das andere Ende an der Sattelstütze einhängbar ist,
- so daß nach dem Aushängen des Zugankers und dem Lösen der Schraube durch entsprechendes Hochschwenken des Sattels und Überspringen der Verzahnungen die Tragkraft bestimmt werden kann,
- die sich nach Wiederbefestigung der Schraube, Zurückdrücken des Sattels entgegen der Federkraft des sich verdrehenden Gummikörpers und Wiedereinhängen des Zugankers durch die erreichte Vorspannung ergibt,
- die der gewünschten Tragkraft entspricht,
- wobei der Zuganker die Vorspannung festhält und zugleich wieder die Horizontallage des Sattels fixiert.

Im Gegensatz zum Stand der Technik wird erfindungsgemäß folglich eine mit relativ geringem Fertigungsaufwand herstellbare Gummimetallbüchse verwendet, nämlich ein äußeres Metallrohr als Gehäuse und ein inneres Metallrohr, zwischen denen der ebenfalls rohrförmige Gummikörper angeordnet und an den einander zugewandten Rohrflächen des äußeren und des inneren Metallrohrs anvulkanisiert ist.

Durch diese Ausbildung als Gummi-Metall-Büchse, die zwischen Sattelstütze und Sattel wirksam ist, wird eine extrem weiche und gut ansprechende Federung erreicht.
Die Montage ist ebenfalls sehr einfach, da anstelle der im Stand der Technik bisher benötigten mehreren Elemente zum Zwecke der Zusammenfügung und Federung lediglich die Anordnund der Gummi-Metall-Büchse notwendig ist.
Zudem ist es möglich, bisher übliche Fahrzeuge mit derartigen Sätteln nachzurüsten.
Durch die entsprechende Anordnund und Ausbildung der Gummi-Metall-Büchse wird die Federungswirkung zwischen dem Sattel und der Sattelstütze durch den sich verdrehenden anvulkanisierten Gummikörper erreicht.

Die weiteren erfindungsgemäßen Merkmale dienen dazu, einer einfache und sichere Tragkraftverstellung durch eine arretierbare Schwenkung des Sattels zu erreichen.

Hierdurch ist es möglich, die Federung dem Gewicht der auf dem Sattel aufsitzenden Person anzupassen. Dazu wird zunächst der Zuganker von der Sattelstütze gelöst, und der Sattel nach dem Lösen der Befestigungsschraube mehr oder weniger nach oben geschwenkt. In dieser Position wird die Gummi-Metall-Büchse zwischen der Sattelstütze und dem Sattelrahmen fixiert, indem die Befestigungsschraube zum Festhalten der beiden in einen entsprechenden Eingriff gebrachten Verzahnungen angezogen wird.

Anschließend wird der Sattel entgegen der Federkraft des sich verdrehenden Gummikörpers in die Horizontale (normale Sitzposition) gedrückt und der Zuganker an der Sattelstütze eingehängt, so daß diejenige Vorspannung erreicht ist, die für die gewünschte Tragkraft benötigt wird.
Durch die Flexibilität des Zugankers wird eine Begrenzung der Aufwärtsbewegung bis in die Normalstellung des Sattels ermöglicht, während die Abwärtsbewegung beim Einfedern des Sattels durch den Zuganker unbehindert ist.
Zusätzlich kann noch eine Gummischeibe oder dergleichen als Stoßfänder zwischengefügt werden, um die Aufwärtsanschlagbewegung abzufedern.
Der Zuganker kann als Gliederkette ausgebildet sein, die am Sattelrahmen befestigt ist.
Bevorzugte Weiterbildungen sind in den Ansprüchen 2 und 3 bezeichnet.

Um eine erhöhte Tragfähigkeit und Verdrehkraft zu erreichen, wird die Ausbildung gemäß Anspruch 4 vorgeschlagen. Durch diese Durchmesserreduktion nach der Vulkanisation ist der Gummikörper der Gummi-Metall-Büchse auf Spannung gesetzt, so daß erhöhte Federungskräfte erreicht werden.

Die ineinandergreifenden Verzahnungen können so angepaßt ausgebildet sein, daß eine Verstellung pro Zahn einem bestimmten Kilogrammbetrag einer aufsitzenden Person entspricht.

Die Gummi-Metall-Büchse ist so weit wie eben möglich nach vorn verlagert, um einen langen Lastarm zu erhalten, welcher z.B. bei einem Schwingwinkel von 10° eine sanfte Einfederung von ca. 4 cm am Sattelrücken ermöglicht.
Es können somit auch grobe Unebenheiten der Fahrbahn problemlos abgefangen werden.
Damit wird ein großer Vorteil insbesondere für ältere Menschen mit Erkrankungen der Wirbelsäule erreicht.

Ein Ausführungsbeispiel der Erfindung ist in der Zeichnung streng schematisch dargestellt und im folgenden näher beschrieben.
Es zeigt:
- Fig. 1: ein Seitenansicht einer Federvorrichtung;
- Fig. 2: eine Einzelheit in Seitenansicht;
- Fig. 3: die Federvorrichtung mit Einzelteilen in Vorderansicht;
- Fig. 4 und 5: eine Seitenansicht der Federvorrichtung mit normalen bzw. hochgeschwenktem Sattel.

In der Zeichnung ist eine Vorrichtung zur Federung und Tragkraftverstellung eines Fahrzeugsattels 1 mit einem Sattelgestell 2 aus Metall gezeigt:
Es handelt sich dabei um den Sattel eine Fahrrades.
Am Sattel 1 ist eine rohrförmige Sattelstütze 3 befestigt.

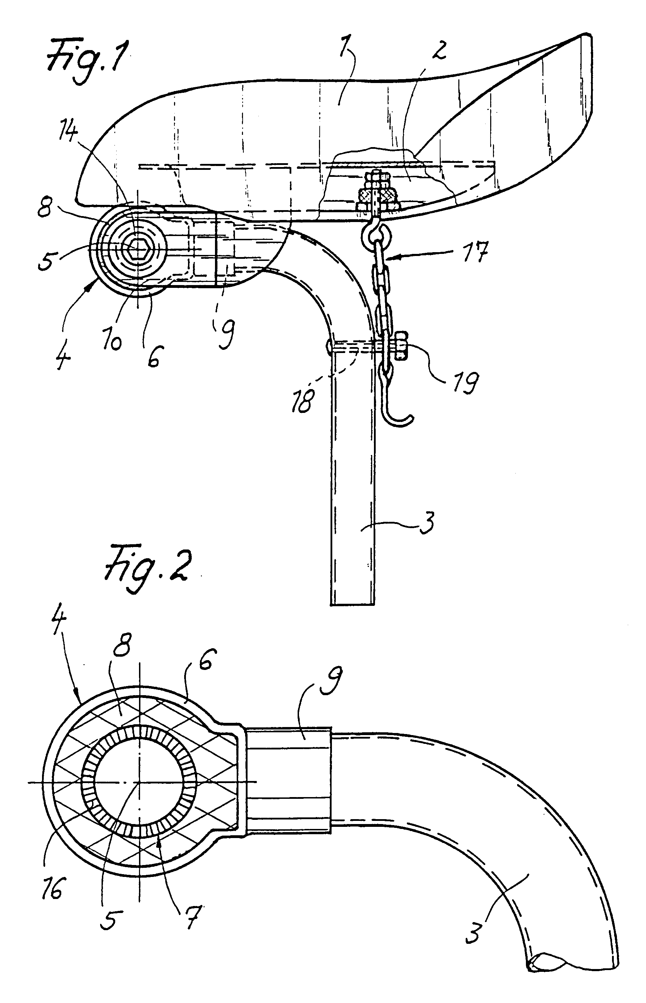

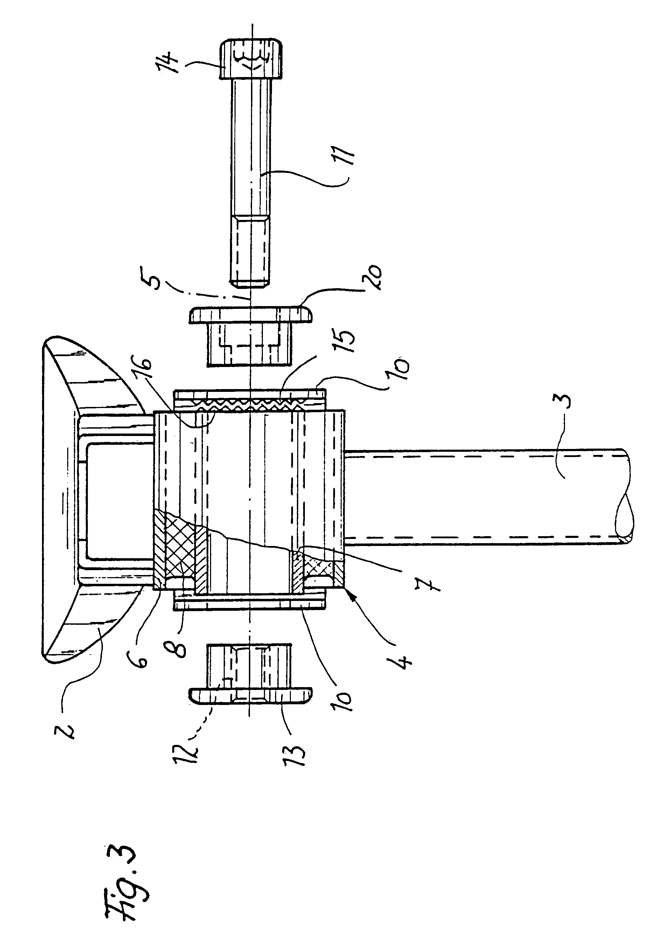

Zwischen Sattelstütze 3 und Sattel 1 ist eine rohrförmige Gummi-Metall-Büchse 4 angeordnet, deren Schwenkachse 5 quer zur Sattelstütze 3 und quer zur Fahrtrichtung des Fahrzeuges gerichtet ist, die in der Ansicht gemäß Fig. 1 die Zeichnungsebene also von vorn nach hinten durchsticht. Wie insbesondere aus Fig. 2 ersichtlich, besteht die Gummi-Metall-Büchse 4 aus einem äußeren Metallrohr 6, einem inneren Metallrohr 7 und einem zwischen den einander zugewandten Flächen der Rohre anvulkanisierten Gummikörper 8.
Das äußere Metallrohr 6 weist einen radial abstehenden Stutzen 9 als Aufnahme für das Ende der Sattelstütze 3 auf.
Das eingesteckte Ende der Sattelstütze 3 kann mit dem Stutzen 9 verschraubt werden, ist aber vorzugsweise mit diesem verschweißt.
Der Stutzen 9 kann einstückig mit dem äußeren Metallrohr 6 (als T-Stück) ausgebildet sein.
Bevorzugt ist die Ausbildung so getroffen, daß die Gummi-Metall-Büchse 4 in fertig zusammengestelltem und vulkanisiertem Zustand im Außendurchmesser reduziert wird, so daß eine erhöhte Federvorspannung erreicht wird.

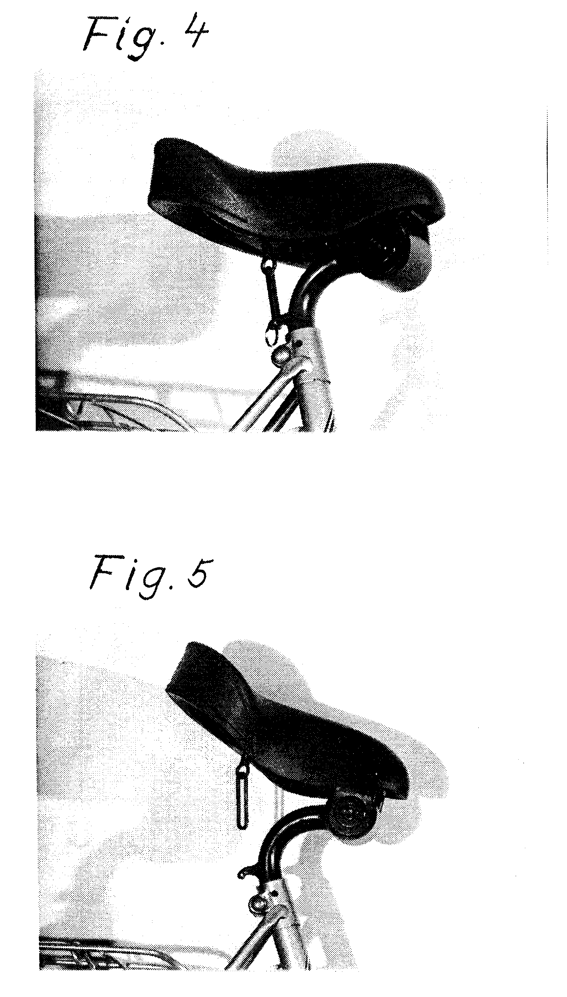

Wie in Fig. 1 zu sehen und in Fig. 3 verdeutlicht, ist die Gummi-Metall-Büchse 4 zwischen den Gabelschenkeln 10 eines Gabellagers als Bestandteil des Sattelgestells 2 mittels einer diese durchgreifenden Schraube 11 fixiert. Die Schraube 11 greift in eine Gewindebohrung 12 einer Kopfplatte 13, die auf der dem Schraubenkopf 14 entgegengesetzten Seite der Gummi-Metall-Büchse 4 angeordnet ist. Einer der Gabelschenkel 10, in der Zeichnungsfigur 3 der rechte, ist mit einer Verzahnung 15 (Radialverzahnung) auf der der Gummi-Metall-Büchse 4 zugewandten Fläche versehen.
Die dieser Verzahnung 15 benachbarte Stirnfläche des inneren Metallrohres 7 ist mit einer passenden Verzahnung 16 versehen.

Am Sattel 1, insbesondere an Metallrahmenteilen des Sattels (Sattelgestell. 2), ist das eine Ende eines flexiblen Zugankers 17 befestigt, dessen anderes ende an der Sattelstütze 3 gehalten ist.
Im Ausführungsbeispiel ist der Zuganker 17 als Gliederkette ausgebildet.

Durch den erfindungsgemäßen Einsatz der Gummi-Metall-Büchse 4 wird eine extrem weiche Einfederung dadurch erreicht, daß der Sattel 1 nur an einer Stelle, nämlich im Gummikörper 8 schwingbar gelagert ist.
Es entsteht eine Einpunktaufhängung ohne jede Stoßübertragung durch Gelenkteile und Spiralfedermechanismen.

Die Veränderung der Tragkraft nach oben oder unten geschieht durch das Hochschwenken oder Niederschwenken des Sattels 1 um das verzahnte Innenrohr 7 herum. Hierzu muß der Zuganker 17 ausgehängt werden nach dem Lösen der Befestigungsschraube 19.
Die Spannschraube 11 wird sodann so weit gelöst, bis die Verzahnung 15 + 16 überspringen kann.
Pro Zahn macht die Verstellung ca. 15 kg aus.
Nachdem die Spannschraube 11 wieder festgezogen ist, wird der Sattel 1 entgegen der Federkraft des sich verdrehenden Gummikörpers 8 nach unten gedrückt, bis sich der Zuganker 17 wieder einhängen läßt und somit die Horizontallage des Sattels 1 wieder hergestellt ist.

Der Sattel 1 ist in Fig. 4 aus der normalen Sitzposition nach Fig. 1 entsprechend der beschriebenen Vorgehensweise in eine Bereitschaftslage hochgeschwenkt dargestellt.

Durch Druckeinwirkung auf die Sitzfläche des Sattels 1 kann dieser unter Vorspannung des Gummikörpers 8 wieder nach unten in die Sitzposition überführt und dann der Zuganker 17 entsprechend an der Sattelstütze 3 befestigt werden.

Auf diese Weise ist eine Vorspannung der Gummi-Metall-Büchse in gewünschter Höhe erreicht, was zu einer verbesserten und insbesondere einstellbaren Tragkraft führt und wodurch eine Tragkraftveränderung sehr einfach ermöglicht ist.

## Patentansprüche

1. Vorrichtung zur Federung und Tragkraftverstellung eines Fahrzeugsattels,
- wobei der Sattel (1) unter der Sattelnase ein Schwenkgelenk aufweist,
- dessen Schwenkachse (5) quer zur Fahrtrichtung des Fahrzeugs gerichtet ist,
- wobei das Schwenkgelenk aus einer Gummi-Metall-Feder mit einem äußeren Metallgehäuse,
- einem inneren Metallrohr (7)
- und einem zwischen den einander zugewandten Flächen des Metallgehäuses und des Metallrohrs (7) an mindestens einer dieser Flächen anvulkanisierten Gummikörper (8) besteht,
- wobei das Metallrohr (7) mit dem Sattel (1) und das Metallgehäuse mit der Sattelstütze (2) fest verbunden ist,
- und die Winkellage des inneren Metallrohrs gegenüber dem dem äußeren Metallgehäuse verstellbar ist
- dadurch **gekennzeichnet**, daß
- das äußere Metallgehäuse ein Metallrohr (6) ist,
- das mit dem Gummikörper (8) und dem inneren Metallrohr (7) eine Gummi-Metall-Büchse (4) bildet,
- das Sattelgestell (2) an der Gummi-Metall-Büchse (4) mittels einer sattelgestellseitigen Verzahnung (15) und einer damit in Eingriff stehenden Verzahnung (16) an dem inneren Metallrohr (7) sowie mittels einer Schraube (11) befestigt ist
- zum Verstellen der Tragkraft der Gummi-Metall-Büchse (4) ein Zuganker (17) vorgesehen ist und
- am Sattelgestell (2) ein Ende des im Sinne einer zur Begrenzung der Aufwärtsbewegung des Sattels (1) und im Sinne eines unbehinderten Einfederns des Sattels (1) bei seiner Abwärtsbewegung flexiblen Zugankers (17) befestigt ist,
- während das andere Ende an der Sattelstütze (3) einhängbar ist,
- so daß nach dem Aushängen des Zugankers (17) und dem Lösen der Schraube (11) durch entsprechendes Hochschwenken des Sattels (1) und Überspringen der Verzahnungen (15, 16) die Tragkraft bestimmt werden kann,
- die sich nach Wiederbefestigung der Schraube (11), Zurückdrücken des Sattels (1) entgegen der Federkraft des sich verdrehenden Gummikörpers (8) und Wiedereinhängen des Zugankers (17) durch die erreichte Vorspannung ergibt,
- die der gewünschten Tragkraft entspricht,
- wobei der Zuganker (17) die Vorspannung festhält und zugleich wieder die Horizontallage des Sattels (1) fixiert.

2. Vorrichtung nach Anspruch 1,
dadurch gekennzeichnet, daß das äußere Metallrohr (6) einen radial abstehenden Stutzen (9) als Aufnahme für das Ende der Sattelstütze (3) aufweist.

3. Vorrichtung nach Anspruch 2,
dadurch gekennzeichnet, daß das in den Stutzen (9) eingesteckte Ende der Sattelstütze (3) mit dem Stutzen (9) verschraubt oder verschweißt ist.

4. Vorrichtung nach einem der Ansprüche 1-3,
dadurch gekennzeichnet, daß die Gummi-Metall-Büchse (4) zur Erreichung einer Federvorspannung in vulkanisiertem Zustand im Außendurchmesser reduziert ist.

5. Vorrichtung nach einem der Ansprüche 1 bis 4,
dadurch gekennzeichnet, daß die Gummi-Metall-Büchse (4) zwischen den Gabelschenkeln (10) eines Gabellagers des Sattelgestells (2) mittels der diese durchgreifenden Schraube (11) fixiert ist.

6. Vorrichtung nach einem der Ansprüche 1 bis 5,
dadurch gekennzeichnet, daß mindestens einer der Gabelschenkel (10) mit der Verzahnung (15) auf der der Gummi-Metall-Büchse (4) zugewandten Fläche versehen ist und daß die dieser Fläche benachbarte Stirnfläche des inneren Metallrohres (7) der Gummi-Metall-Büchse (4) mit der zu der Verzahnung (15) passenden Verzahnung (16) ausgestattet ist.

## Claims

1. Apparatus for making flexible and supporting capacity adjustment of a vehicle saddle,
- in which the saddle (1) has under the saddle nose a swivel joint,
- whose swivel axis (5) is directed transversely to the vehicle travel direction,
- in which the swivel joint comprises a rubber-metal spring with an outer metal casing,
- an inner metal tube (7),
- and a rubber body (8) between the facing surfaces of the metal casing and the metal tube (7) and vulcanized onto at least one of said surfaces,
- in which the metal tube (7) is firmly connected to the saddle (1) and the metal casing to the seat pillar (3),
- and the angular position of the inner metal tube is adjustable with respect to the outer metal casing,
characterized in that
- the outer metal casing is a metal tube (6),
- which forms a rubber-metal bush (4) with the rubber body (8)
and the inner metal tube (7),
- the saddle frame (2) is fixed to the rubber-metal bush (4) by means of a saddle frame-sidde tooth system (15) and a tooth system (16), engaging therewith, on the inner metal tube (7), as well as by means of a screw (11),
- for adjusting the supporting capacity of the rubber-metal bush (4) a tie rod (17) is provided and
- on the saddle frame (2) is fixed one end of a flexible tie rod (17) for limiting the upward movement of the saddle and for the unhindered springing in of the saddle (1) during its downward movement,
- whereas the other end can be placed on the seat pillar (3),
- so that after removing the tie rod (17) and releasing the screw (11) by corresponding upward swinging of the saddle (1) and the jumping over of the tooth system (15, 16) the supporting capacity can be determined,
- which is obtained by the preloading reached after refixing the screw (11), forcing back the saddle (1) counter to the spring tension of the rotating rubber body (8) and the replacing of the tie rod (17),
- which corresponds to the desired supporting capacity,
- the tie rod (17) maintaining the preloading and at the same time again fixes the horizontal position of the saddle (1).

2. Apparatus according to claim 1, characterized in that the outer metal tube (6) has a radially projecting connection (9) for receiving the end of the seat pillar (3).

3. Apparatus according to claim 2, characterized in that the end of the seat pillar (8) inserted in the connection (9) is screwed or welded to said connection (9).

4. Apparatus according to one of the claims 1 to 3, characterized in that the rubber-metal bush (4) has a reduced external diameter in the vulcanized state in order to obtain the pre-loading.

5. Apparatus according to one of the claims 1 to 4, characterized in that the rubber-metal bush (4) is fixed between the fork legs (10) of a fork bearing of the saddle frame (2) by means of the screw (11) passing through the same.

6. Apparatus according to one of the claims 1 to 5, characterized in that at least one of the fork legs (10) is provided with the tooth system (15) on the surface facing the rubber-metal bush (4) and that the end face of the inner metal tube (7) of the rubber-metal bush (4) adjacent to said surface is equipped with the tooth system (16) matching the tooth system (15).

## Revendications

1. Dispositif pour la suspension élastique et l'ajustage de la force portante d'une selle de véhicule,
- la selle (1) présentant une articulation pivotante sous le nez de la selle,
- dont l'axe de pivotement (5) est orienté transversalement par rapport au sens de la marche du véhicule,
- l'articulation de pivotement étant constituée par un ressort acier-caoutchouc avec un bâti métallique extérieur,
- un tube métallique intérieur (7)
- et un corps en caoutchouc (8) vulcanisé entre les faces tournées l'une vers l'autre du bâti métallique et du tube métallique (7) sur au moins l'une de ces faces,
- le tube métallique (7) étant relié de manière fixe à la selle (1) et le bâti métallique au tube porte-selle (2)
- et la position angulaire du tube métallique intérieur étant réglable par rapport au bâti métallique extérieur,
caractérisé en ce que
- le bâti métallique extérieur est un tube de métal (6)
- qui forme avec le corps en caoutchouc (8) et le tube de métal intérieur (7) une boîte en caoutchouc et en métal (4),
- la carcasse de la selle (2) est fixée à la boîte en caoutchouc et en métal (4) au moyen d'une denture (15) du côté de la carcasse de la selle et d'une denture (16) qui est en prise avec celle-ci sur le tube métallique intérieur (7) ainsi qu'au moyen d'une vis (11),
- qu'un tirant d'ancrage (17) est prévu pour l'ajustage de la force portante de la boîte en caoutchouc et en métal (4) et
- qu'une extrémité du tirant d'ancrage (17) flexible dans le sens d'une limitation du mouvement ascendant de la selle (1) et dans le sens du retour élastique sans obstacle de la selle (1) lors de son mouvement descendant est fixée à la carcasse de la selle (2),
- tandis que l'autre extrémité peut être suspendue au tube porte-selle (3),
- si bien que la force portante peut être déterminée après avoir enlevé le tirant d'ancrage (17) et desserré la vis (11) en faisant pivoter la selle (1) de manière corres-pondante vers le haut et en faisant sauter les dentures (15, 16),
- force qui résulte de la précontrainte atteinte après avoir fixé à nouveau la vis (11), enfoncé à nouveau la selle (1) à l'encontre de la force du ressort du corps en caoutchouc (8) qui se tord et après suspendu à nouveau le tirant d'ancrage (17),
- précontrainte qui correspond à la force portante souhaitée,
- le tirant d'ancrage (17) maintenant la précontrainte et fixant simultanément à nouveau la position horizontale de la selle (1).

2. Dispositif selon la revendication 1, caractérisé en ce que le tube métallique extérieur (6) présente un coude de rallonge (9) faisant saillie radialement comme logement pour l'extrémité du tube porte-selle (3).

3. Dispositif selon la revendication 2, caractérisé en ce que l'extrémité du tube porte-selle (3) enfoncée dans le coude de rallonge (9) est vissée ou soudée au coude de rallonge (9).

4. Dispositif selon l'une des revendications 1 à 3, caractérisé en ce que la boîte en métal et caoutchouc (4) a, à l'état vulcanisé, un diamètre extérieur qui est réduit pour obtenir une précontrainte du ressort.

5. Dispositif selon l'une des revendications 1 à 4, caractérisé en ce que la boîte en métal et caoutchouc (4) est fixée entre les montants de fourche (10) d'un logement de fourche de la carcasse de la selle (2) au moyen de la vis (11) qui les traverse.

6. Dispositif selon l'une des revendications 1 à 5, caractérisé en ce qu'au moins l'un des montants de fourche (10) est pourvu de la denture (15) sur la face tournée vers la boîte en métal et caoutchouc (4) et que la face frontale du tube métallique intérieur (7) de la boîte en métal et caoutchouc (4) qui est voisine de cette face est équipée de la denture (16) qui correspond à la denture (16).
